# EUROPEAN PATENT SPECIFICATION

(11) **EP 0 620 982 B1**
(45) Date of publication and mention of the grant of the patent: **29.12.1997**
(21) Application number: 94301837.4
(22) Date of filing: 15.03.1994
(51) Int. Cl.: A24B 15/30, A23L 1/221

(54) **Flavouring smoking articles with vanillin glycoside**
Aromatisierung von Rauchartikeln mit Vanillin-Glykosid
Aromatisation d'articles à fumer au moyen de glycoside de vanilline

(30) Priority: 06.04.1993 GB 9307228
(43) Date of publication of application: 26.10.1994
(73) Proprietor: BRITISH-AMERICAN TOBACCO COMPANY LIMITED, Staines, Middlesex TW18 1DY (GB)
(72) Inventor: Dowle, Michelle Patricia, Southampton (GB); O'Reilly, Rosemary Elizabeth, Eastleigh, Hampshire (GB)
(74) Representative: Walford, Margot Ruth

(56) References cited:
- EP-A- 0 354 118
- WO-A-88/09133
- FR-A- 2 680 798
- US-A- 4 941 486
- FOOD RESEARCH, vol.8, 1943 pages 343 - 351 F.E. ARANA 'Action of a beta-glucosidase in the curing of vanilla'

## Description

The subject invention relates to the imparting of flavour and/or aroma properties to articles or substances.

There have been made numerous proposals for the incorporation in smoking articles, cigarettes for example, of compounds which effect a modification in the sensory perception appertaining to the mainstream and/or the sidestream smoke of the smoking articles.

An agent commonly proposed for use as a smoke modifying agent is vanillin. Vanillin may be obtained from cured vanilla pods (beans).

In that vanillin is volatile, the application of vanillin simpliciter to the smoking material or other component of a smoking article is less than fully efficient. With a view to overcoming this problem, proposals have been made for the incorporation in smoking articles of synthetic, non-volatile or substantially non-volatile compounds which, during and as a result of the smoking conditions, yield vanillin or a vanillic or related substance. Examples of this approach are disclosed in the following patent specifications: EP 413 162, EP 461 872, EP 470 766, EP 503 795, EP 506 231, EP 510 817, EP 514 202, WO 88/09133 and WO 92/10107.

US 4,941,486 to Duke *et al* describes a smoking article comprising a flavour precursor such as synthesised ethyl vanillin glucoside. The flavour precursor provides no substantial aroma to the cigarette prior to use, but releases the flavour during use. The flavour precursor may be applied to the smoking article wrapper. Alternatively, the flavour precursor may be incorporated into the filter element in the form of a flavoured pellet.

It is also known to incorporate in smoking materials glycosides of tobacco or *Stevia rebaudiana* origin. See, for example, EP 154 235 and GB 1,508,616.

The subject invention provides a method of modifying a smoking article, wherein vanillin glycoside is incorporated in a smoking article, said vanillin glycoside being of natural origin.

The subject invention further provides a smoking article, which article comprises vanillin glycoside of natural origin.

The term "vanillin glycoside of natural origin" is used herein to mean that the vanillin glycoside derives from a natural source, uncured pods of a vanilla plant (*Vanilla plansfolia*) for example, in which it exists as vanillin glycoside, as opposed to it being vanillin glycoside made by artificial synthesis.

In accordance with the subject invention the vanillin glycoside may be incorporated with one or more of: smoking material, wrapping material, filter material and wrapper adhesive. In this context "smoking material" includes tobacco, reconstituted tobacco and tobacco substitute materials. The term "wrapping material" includes cigarette paper and the term "adhesive" includes cigarette paper seam adhesive.

Upon a smoking article of the subject invention being smoked, the smoking conditions cause breakage of the vanillin/glucose molecular bond. The so released volatile vanillin is then effective to aromatise the mainstream and/or sidestream smoke of the smoking article.

The vanillin glycoside may form a component of a formulated flavourising/aromatising composition.

The subject invention yet further provides a method of producing a flavourising/aromatising agent, wherein vanillin glycoside is extracted from vanilla pods.

An example of carrying out the subject invention will now be given.

### EXAMPLE

100g green, i.e. uncured, ripe vanilla pods were homogenised and then soxhlet extracted with 200ml methanol. The methanol was then evaporated under vacuum, whereafter the residue was dissolved in 70% ethanol (30% water). The resultant extract contained vanillin glycoside plus vanillic acid glycoside, p-hydroxy benzaldehyde glycoside and p-hydroxybenzoic acid glycoside. This extract was applied to cigarette tobacco. It was observed that upon smoking cigarettes containing the tobacco to which the extract had been applied, the sidestream smoke exhibited a pleasant vanilla aroma.

## Claims

1. A method of modifying a smoking article, wherein vanillin glycoside is incorporated in a smoking article, said vanillin glycoside being of natural origin.

2. A method according to Claim 1, wherein said vanillin glycoside is a product of extraction of vanilla pods.

3. A smoking article or a smoking material, a wrapping material, a filter material, a wrapper adhesive, which article, material or adhesive comprises vanillin glycoside of natural origin.

4. A smoking article or a smoking material, a wrapping material, a filter material, a wrapper adhesive according to Claim 3, wherein said vanillin glycoside is a product of extraction of vanilla pods.

## Patentansprüche

1. Verfahren zum Modifizieren eines rauchbaren Artikels, wobei ein Vanillin-Glykosid einem rauchbaren Artikel beigemengt bzw. zugesetzt wird, wobei das Vanillin-Glykosid von natürlichem Ursprung ist.

2. Verfahren nach Anspruch 1, wobei das Vanillin-Glykosid ein Produkt der Extraktion von Vanilleschoten bzw. Vanillekapseln ist.

3. Rauchbarer Artikel oder Rauchmaterial, Umhüllungsmaterial, Filtermaterial, Umhüllungsadhäsions- bzw. -klebmasse, wobei der Artikel, das Material oder die Adhäsions- bzw. Klebmasse Vanillin-Glykosid von natürlichem Ursprung aufweist.

4. Rauchbarer Artikel oder Rauchmaterial, Umhüllungsmaterial, Filtermaterial, Umhüllungsadhäsions- bzw. -klebmasse nach Anspruch 3, wobei das Vanillin-Glykosid ein Produkt der Extraktion von Vanilleschoten bzw. Vanillekapseln ist.

## Revendications

1. Procédé de modification d'un article à fumer, dans lequel du glycoside de vanilline est incorporé dans un article à fumer, ledit glycoside de vanilline étant d'origine naturelle.

2. Procède selon la revendication 1, dans lequel ledit glycoside de vanilline est un produit d'extraction sur des gousses de vanille.

3. Article à fumer ou matériau à fumer, matériau d'emballage, matériau de filtre, adhésif d'enveloppe, cet article, matériau ou adhésif comprenant du glycoside de vanilline d'origine naturelle.

4. Article à fumer ou matériau à fumer, matériau d'emballage, matériau de filtre, adhésif d'enveloppe selon la revendication 3, dans lequel ledit glycoside de vanilline est un produit d'extraction de gousses de vanille.
